# EUROPEAN PATENT APPLICATION

(11) **EP 2 587 710 A1**
(43) Date of publication of application: **01.05.2013**
(21) Application number: 11290493.3
(22) Date of filing: 24.10.2011
(51) Int. Cl.: H04L 5/02, H04W 28/00, H04L 5/00

(54) **Method for sharing resources in a wireless network and associated equipment**

(71) Applicant: Alcatel Lucent, 75007 Paris (FR)
(72) Inventor: Alberi-Morel, Marie-Line, Route de Villejust 91620 Nozay (FR); Capdevielle, Véronique, Route de Villejust 91620 Nozay (FR)
(74) Representative: Sogan, Gloria

(57) **Abstract**

The present invention refers to a method for sharing radio resources in a wireless communication network comprising cells (MC1...MC9) of a first structure and cells (SC1, SC2, SC3) of a second structure,
a given cell (SC1) of the second structure having a coverage area overlapping at least partially a coverage area of a given cell (MC3) of the first structure wherein,
when a user terminal (u7, u10) of the given cell (MC3) of the first structure receives, from a base station (MB 1) of the given cell (MC3) of the first structure, a signal of the first structure on a given channel (f7, f10) and is located within a predetermined area (3) around the given cell (SC1) of the second structure,
a selected user terminal (x7, x10) of the given cell (SC1) of the second structure is paired to the said user terminal (u7, u10) of the given cell (MC3) of the first structure and a signal of the second structure aimed at the paired user terminal (x7, x10) of the given cell (SC1) of the second structure is sent, from a base station (SB) of the given cell (SC1) of the second structure, on the same channel (f7, f10) as the given channel (f7, f10) used for the signal of the first structure,
the said signal of the second structure comprising:
- one part aimed at the paired user terminal (u7, u10) of the first structure and modulated according to a first modulation format and,
- another part aimed at the paired user terminal (x7, x10) of the second structure and modulated according to a second modulation format,

the said parts being superimposed in a third modulation format.

## Description

### BACKGROUND OF THE INVENTION

The present invention relates to the field of wireless networks and in particular wireless network gathering cells of different structures, for example cells of different sizes.
With the development of smartphones with multiple applications requiring huge data exchanges such as video-oriented applications (Video-on-demand "VOD", TV...), solutions providing enhanced bandwidth are necessary. One way to cope with this demand corresponds to the deployment of small-size cells (also called short radius cells). Such small-size cells are used by the operators as a complement to the macro-cells which allows to unload the macro-cells. Furthermore, as the small-size cells coverage area generally overlap the coverage area of the macro-cells, solutions need to be find to avoid interferences between both types of cells. One way to avoid interferences is to allocate a part of the frequency spectrum to the small-size cells and the other part to the macro-cells. However, as the operators have a limited available bandwidth corresponding to their licence, such sharing of the allocated frequency spectrum would lead to a reduction of the available resources for the macro-cells limiting thus the interest of the small-size cells implementation. Other advanced resource sharing solutions mechanisms such as mechanisms based on game theory have been developed but require high computational resources to be implemented.

### SUMMARY OF THE INVENTION

It is therefore an object of the present invention to overcome the above mentioned drawbacks of the state of the art and to provide a solution allowing to share radio resources between cells of different structures within a common wireless network requiring limited computational resources to provide a high bandwidth efficiency without creating destructive interferences at the user terminals of the different cells.

Thus, the present invention refers to a method for sharing radio resources in a wireless communication network comprising cells of a first structure and cells of a second structure, a given cell of the second structure having a coverage area overlapping at least partially a coverage area of a given cell of the first structure wherein, when a user terminal of the given cell of the first structure receives, from a base station of the given cell of the first structure, a signal of the first structure on a given channel and is located within a predetermined area around the given cell of the second structure, a selected user terminal of the given cell of the second structure is paired to the said user terminal of the given cell of the first structure and a signal of the second structure aimed at the paired user terminal of the given cell of the second structure is sent, from a base station of the given cell of the second structure, on the same channel as the given channel used for the signal of the first structure, the said signal of the second structure comprising:
- one part aimed at the paired user terminal of the first structure and modulated according to a first modulation format and,
- another part aimed at the paired user terminal of the second structure and modulated according to a second modulation format,
the said parts being superimposed in a third modulation format.

According to another aspect of the present invention, the first structure corresponds to a macro-cell network and the second structure corresponds to a small-size cell network;

According to another aspect of the present invention, the part of the given signal of the second structure aimed at the paired user of the first structure corresponds to the signal of the second structure sent from the base station of the given cell of the second structure.

According to a further aspect of the present invention, the said method comprises the following steps:
- determining, at the level of the given cell of the second structure, channels used by the user terminals of the given cell of the first structure;
- detecting among the determined channels and their paired user terminals, the user terminals of the given cell of the first structure located within the predetermined area;
- determining the signal qualities associated with the detected user terminals of the given cell of the first structure and the signal qualities associated with the user terminals of the given cell of the second structure;
- pairing a detected user terminal of the given cell of the first structure and a user terminal of the given cell of the second structure according to the signal qualities associated with both user terminals;
- establishing a coordination between the base station of the given cell of the first structure and the base station of the given cell of the second structure;
- determining a power to be allocated to the signal of the second structure;
- producing and transmitting the signal of the second structure according to the determined power.

According to an additional aspect of the invention, the determination of the channels used by the users of the given cell of the first structure is achieved by sending a signal, from the base station of the given cell of the first structure to the base station of the given cell of the second structure, comprising the information corresponding to channels of the given cell of the first structure.

According to another aspect of the invention, the detection of the user terminals of the given cell of the first structure located within the predetermined area is achieved by the base station of the cell of the second structure by monitoring the signal quality of the signals received from the user terminals of the given cell of the first structure.

According to another aspect of the present invention, a channel is defined by its frequency, its time slots and its codes.

According to a further aspect of the invention, the coordination between the base station of the given cell of the first structure and the base station of the given cell of the second structure allows the base station of the given cell of the second structure to know the data symbols to send on the part of the signal of the second structure aimed at the paired user of the first structure.

According to an additional aspect of the invention, the predetermined area corresponds to an area equal or larger than coverage area of the cell of the second structure

According to another aspect of the invention, the first, second and third modulation formats are digital modulation formats.

According to a further aspect of the invention, the first modulation format comprises a first number of bits per symbol, the second modulation format comprises a second number of bits per symbol and the third modulation format comprises a number of bits per symbol equal to the sum of the first and the second number of bits per symbol.

According to an additional aspect of the invention, the first modulation format is a 16 quadrature amplitude modulation "16QAM" format, the second modulation format is a quadrature phase shift keying "QPSK" modulation format and the third modulation format is a 64 quadrature amplitude modulation "64QAM" format.

The embodiments of the present invention also refers to a base station of a cell of the second structure having a coverage area overlapping at least partially a coverage area of a given cell of the first structure and comprising means adapted for:
- determining channels used by user terminals of the given cell of the first structure;
- detecting, among the determined channels and their associated user terminals, the user terminals located within a predetermined area,
- pairing a detected user terminal with a user terminal of the cell of the second structure;
   the base station also comprises
- encoding and modulation means adapted to produce a signal comprising:
   - one part aimed at the user terminal of the first structure located within a predetermined area and modulated according to a first modulation format and,
   - another part aimed at the paired user terminal of the second structure and modulated according to a second modulation format,
- combination means adapted to superimpose the said signal parts in a superimposed signal according to a third modulation format,
- sending means adapted for sending the superimposed signal on the same channel as the determined channel of the paired user terminal of the given cell of the first structure.

According to another embodiment of the present invention, the first structure refers to a macro-cell network and the second structure refers to a small-size cell network.

According to another embodiment of the present invention, the base station also comprises means adapted for:
- detecting a cell of the first structure having a coverage area overlapping at least partially the coverage area of the cell of the second structure;
- determining signal qualities associated with the detected user terminals of the given cell of the first structure and the signal qualities associated with the user terminals of the given cell of the second structure;
- establishing a coordination with a base station of the detected cell of the first structure to determine the signal sent from the said base station of the detected cell of the first structure to a user terminal of the said detected cell of the first structure paired with a user terminal of the cell of the second structure;
- determining the power to be allocated to the signal of the second structure aimed at the user terminal of the second structure paired with a user terminal of the detected cell of the first structure.

### BRIEF DESCRIPTION OF THE DRAWINGS

FIG.1 is a diagram of a portion of network comprising three macro-cells and a small-size cell;
FIG.2 is a diagram of the network portion of Fig.1 with macro-cell and small-size cell user terminals;
FIG.3 is a diagram of a transmitter of a small-size cell base station according to an embodiment of the invention;
FIG.4 is a diagram of a 64QAM constellation;
FIG.5 is a diagram of the superimposition process of a 16QAM part and a QPSK part in a 64QAM signal;
FIG.6 is a diagram of the different steps of the method for sharing resources according to the embodiments of the present invention;

### DETAILED DESCRIPTION OF THE INVENTION

As used herein, the term "QAM" refers to the acronym Quadrature Amplitude Modulation;

As used herein, the term "OFDM" refers to the acronym Orthogonal Frequency Division Multiplexing;

As used herein, the term "QPSK" refers to the acronym Quadrature Phase Shift Keying;

As used herein, the term "RSSI" refers to the acronym Received Signal Strength Indicator;

As used herein, the term "SINR" refers to the acronym Signal to Interference plus Noise Ratio;

As used herein, the term "BPSK" refers to the acronym Binary Phase Shift Keying;

As used herein, the term " OFDM" refers to the acronym Orthogonal Frequency Division Multiplexing;

As used herein, the term "structure" refers to a network or sub-network so that cells of different structures may refer to cells belonging to different operators, or to cells of a common operator having different features such as different sizes (macro and small-size cells for example)

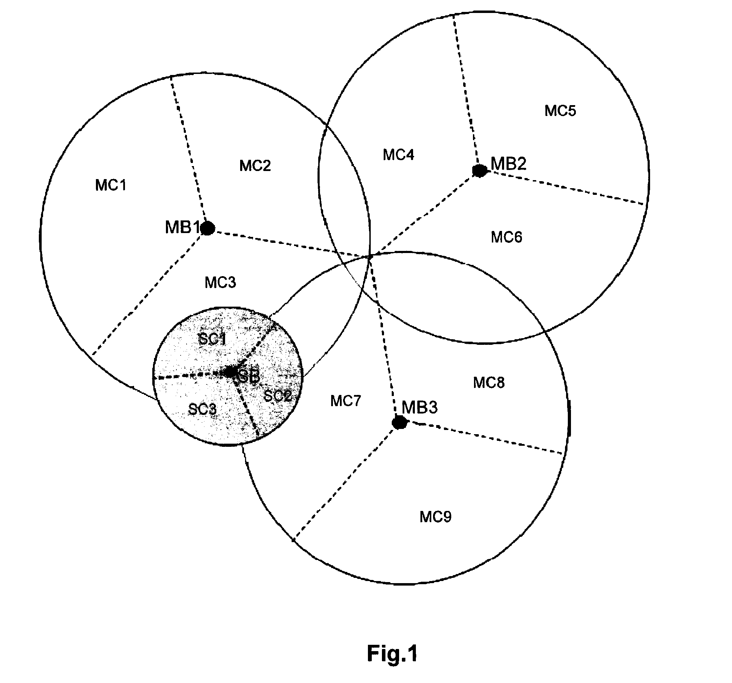

The embodiments of the present invention refer to a method for sharing radio resources in a wireless communication network comprising cells of at least two different structures for example a first structure of macro-cells and a second structure of small-size cells. Figure 1 represents an example of network portion comprising three macro-cell base stations MB1, MB2 and MB3 covering each three sectors which can be considered as three macro-cells noted MCₓ with x=1, 2..9 and a small-size cell base station SB covering three sectors which can be considered as small-size cells noted SC_{y} with y=1, 2 or 3. The small-size cells SC_{y} overlap partially at least one of the macro-cells MCₓ. In the present example, the small-size cells SC1, overlaps the macro-cell MC3, SC2 overlaps MC3 and MC7 and SC3 overlaps MC3 and MC7. Macro-cells may also overlap each other as it is the case for MC3 and MC7, MC2 and MC4 or MC6 and MC8. Furthermore, the macro-cell network is assumed to be dimensioned with a frequency reuse of 3 and a set of 12 channels noted f1...f12. It has to be noted that in practice the number of channels is much higher.

In the case of a given small-size cell SC_{y}, for example SC1, overlapping at least partially the coverage area of a given macro-cell MCₓ, MC3 for example, a user terminal of the macro-cell MC3 can be located within the coverage area of the small-size cell SC1. As a consequence, if the same channel fₙ with n=1...12 is used for the macro-cell user terminal and for a small-size cell user terminal, interferences are produced which leads to a degradation of the signal quality.

Besides, a channel is herein defined by its frequency or wavelength, its time slots and its codes so that interferences are produced if frequency, time slots and codes of two channels are the same.

In order to prevent such interferences, the signal sent from the small-size cell base station SB comprises a part corresponding to the signal sent from the macro-cell base station MB1 so that the signal received by the macro-cell user terminal from the small-size cell base station SB does not produce interferences but appears as a complement of the signal sent from the macro-cell MB1.

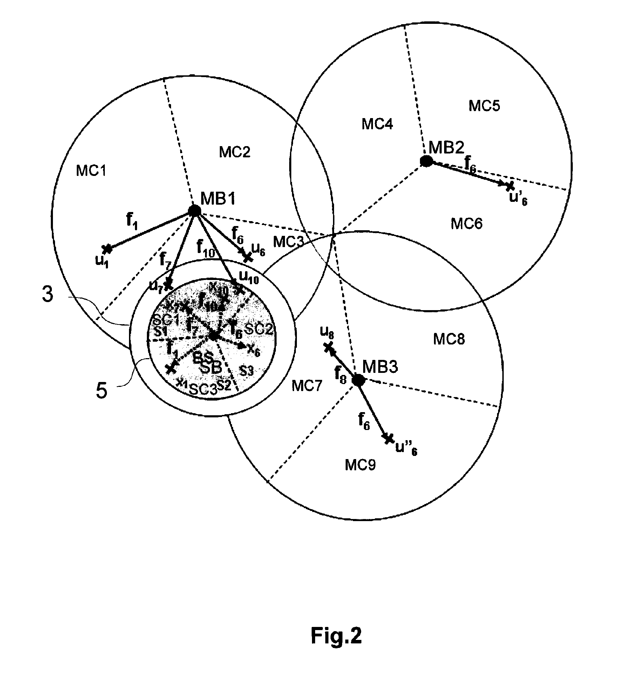

In order to better understand the embodiments of the present invention, figure 2 represents the network portion of figure 1 wherein macro-cell user terminals uᵢ with i=1...12 and small-size cell user terminals xⱼ are represented. Macro-cell user terminal u1 is located in the macro-cell MC1, u6, u7 and u10 are located in MC3, u'6 is located in MC6, u8 is located in MC7 and u"6 is located in MC9. Small-size cell user terminal x1 is located in SC3, x7 and x10 are located in SC1 and x6 is located in SC2. Furthermore, figure 2 represents the channels fᵢ with i=1...12 used for the connection of each user terminal.

When a macro-cell user terminal uᵢ, for example u7, enters and is located within a predetermined area 3 around the small-size base station SB or around the small-size cell SC1, a selected user terminal of the small-size cell SC1, x7 in the present example, is paired with the macro-cell user terminal u7 and the signal aimed at the said small-size cell user terminal x7 is sent on the same channel f7 as the signal sent from the macro-cell base station MB1 to the macro-cell user terminal u7. The predetermined area 3 corresponds to an area usually slightly larger than the coverage area 5 of the small-size cell SC1. Indeed, as several steps are necessary to produce the desired small-size cell signal and as the said small-size cell signal needs to be set up before the macro-cell user terminal enters the coverage area of the small-size cell SC1, the predetermined area 3 is determined according to the estimated time required to do the different steps that will be described hereinafter and according to the estimated displacement speed of a macro-cell user terminal.

The signal aimed at the small-size cell user terminal x7 comprises:
- a part aimed at the paired macro-cell user terminal u7 which is modulated according to a first modulation format. Indeed, even if the signal is aimed at the small-size cell user terminal x7, the said signal is also received by the macro-cell user terminal u7 when u7 is located within the coverage area 5 of the small-size cell SC1.
- another part aimed at the paired small-size cell user terminal x7 and modulated according to a second modulation format.

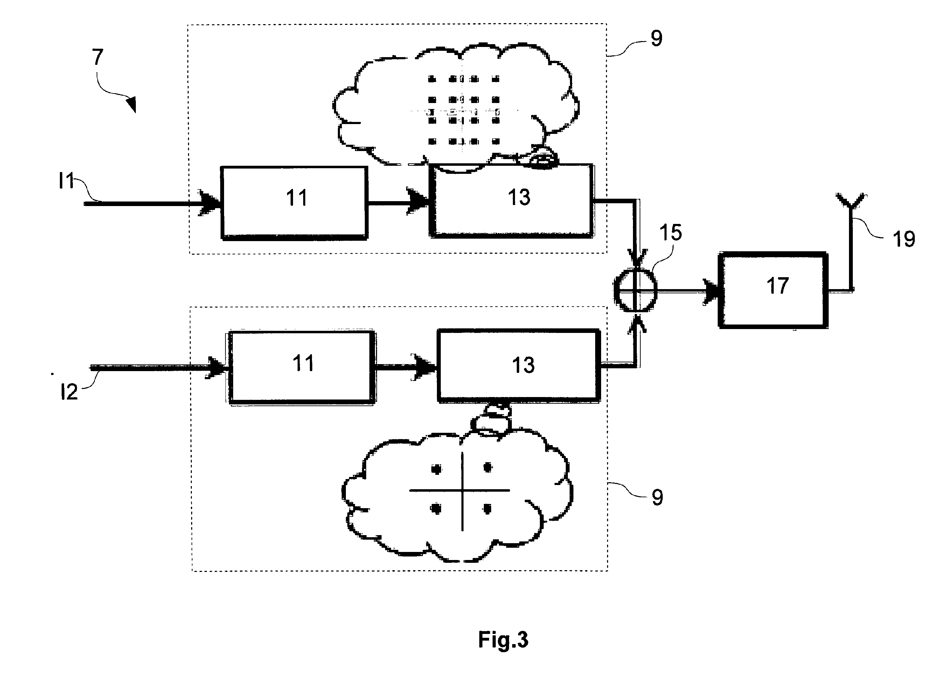

The said parts correspond to the signals comprising the data to be sent to the macro-cell users and the small-size cell users, the said parts being modulated independently and then superimpose in a superimposed signal according to a third modulation format.
Such superimposition is possible with digital modulation formats as described in figure 3.

Figure 3 represents a diagram of the configuration of a transmitter 7 of a small-size cell base station allowing a superimposition of signals. The transmitter 7 comprises two branches 9 in parallel, each branch comprises encoding means 11 and modulation means 13 to provide a part of the signal modulated according to a first modulation format and another part modulated according to a second modulation format which are superimposed in combination means 15 and multiplexed with OFDM techniques in multiplexing means 17 in order to maximize the bandwidth use, the multiplexed signal being transmitted to the antenna 19.

The first modulation format used for the modulation of the part in the upper branch is a 16QAM format and the second modulation format used for the modulation of the part in the lower branch is a QPSK format.

Thus, the first data stream received on the first input I1 and corresponding to the data stream aimed at the macro-cell user terminal u7 is encoded and modulated according to a 16QAM format to provide one signal part and the second data stream received on the second input I2 and corresponding to the data stream aimed at the small-size cell user terminal x7 is encoded and modulated according to a QPSK format to provide another signal part. The superimposition of both parts leads to a signal having a 64QAM modulation format. Indeed, the 16QAM format provides a 4 bits per symbol signal and the QPSK format provides a 2 bits per symbol signal so that the baud rate of the superimposed signal has to be equal to the sum of both baud rates, that is to say, 6 bits per symbol which is the case for the 64QAM format.

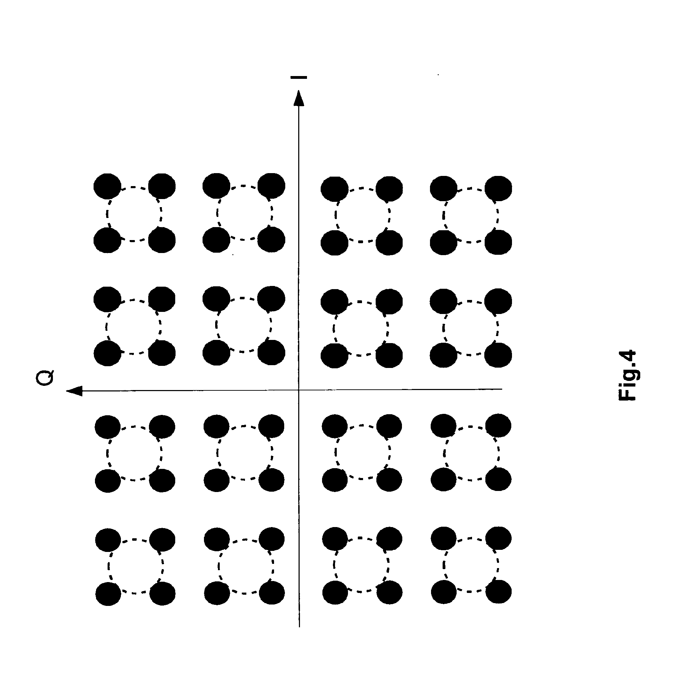

To better understand how both parts are superimposed, figure 4 represents a diagram of a 64QAM constellation. Such constellation corresponds to a representation of the 64 symbols , herein the black dots, in a basis having an x-axis corresponding to the inphase component I and a y-axis corresponding to the quadrature component Q, a symbol corresponding to a 6 bit coding. The transmitted signal has therefore a 64QAM format but is detected by the macro-cell user terminal as a 16 QAM signal. Thus, the transmitted 64QAM symbol is detected and decoded by the macro-cell user terminal as a 16QAM symbol so that a 64QAM symbol is interpreted as being the closest 16QAM symbol in the constellation herein represented by the dotted circles. Four different symbols of the 64 QAM constellation lead therefore to the detection of the same 16QAM symbol. The data corresponding to the first data stream modulated according to a 16QAM format at the base station level can therefore be retrieved by the macro-cell user terminal.

Furthermore, at the small-size cell user terminal level, the transmitted 64QAM symbol is interpreted according to its position with respect to the closest 16QAM symbol in the constellation, represented by the dotted circles in figure 4. Indeed, four different 64 QAM symbols, corresponding to the four adjacent 64 QAM symbols, are associated with a 16 QAM symbol and the position of the transmitted 64QAM symbol with respect to the three other 64 QAM symbols associated to a 16QAM symbol corresponds to the coding of the QPSK signal. The data corresponding to the second data stream modulated according to a QPSK format at the base station level can therefore be retrieved by the small-size cell user terminal.

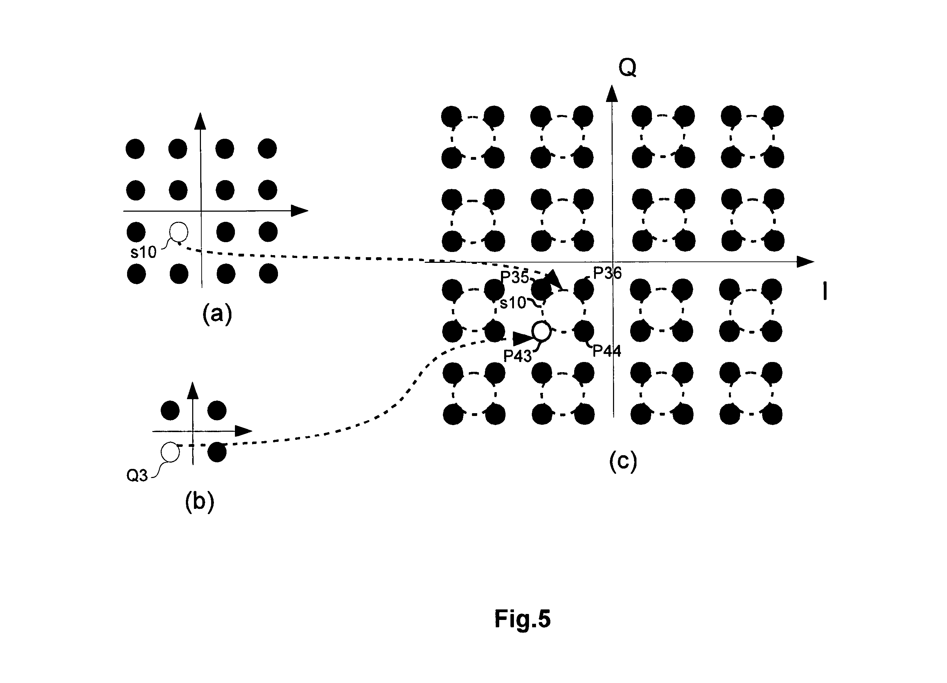

To better understand the superimposition, figure 5 represents an example of superimposed coding based on a given 16QAM coding and a given QPSK coding. Fig.5a represents a 16QAM constellation and the 16QAM symbol which is encoded is represented by the white dot herein noted s10. Fig.5b represents a QPSK constellation and the QPSK symbol which is encoded is represented by the white dot herein noted Q3. Fig.5c represents a 64QAM constellation wherein the 16QAM signal of fig.5a and the QPSK signal of fig.5b are superimposed. To determine the 64QAM symbol to be encoded, the 16QAM symbol s10 of fig.5a is transposed in fig.5c as a virtual 16QAM symbol represented by the dotted circle noted s10. Four 64QAM symbols noted P35, P36, P43, P44 are associated and adjacent with the said virtual 16QAM symbol s10. These four symbols are the four symbols of the QPSK constellation of fig.5b. Thus, the encoded 64QAM symbol P43 corresponds to the encoded QPSK symbol Q3. The transmitted 64QAM symbol P43 gather therefore the information corresponding to the 16QAM symbol s10 and the QPSK symbol Q3.

Such superimposition allows improving the signal quality experienced by a macro-cell user terminal, u7 in the present case, located within the coverage area of the small-size cell, SC1 in the present case. Indeed, the part of the superimposed signal aimed at the macro-cell user is perceived by the macro-cell user terminal u7 as an additional positive contribution to the signal received from the macro-cell base station MB1 and the other part is perceived by u7 as a limited power noise and not as interference.

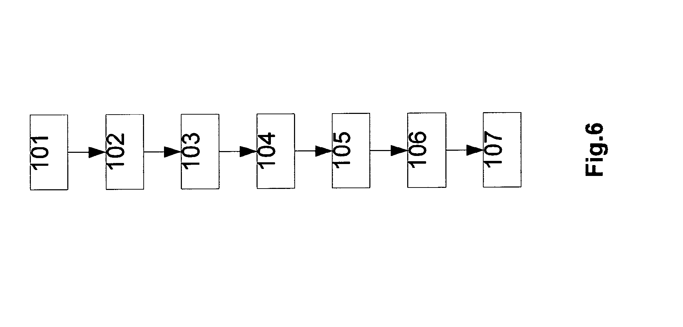

The different steps leading to the transmission of a superimposed signal will now be described in details based on figure 6.

The first step 101 corresponds to the determination by the small-size cell base station, SB in the present case, of the channels used in at least one macro-cell for the communication between the macro-cell base station and the macro-cell user terminals, the said at least one macro-cell having a coverage area overlapping at least partially the coverage area of the small-size cell. In the case of the small-cell SC1, it refers to the detection of the channels used in the macro-cell MC3.

According to a first embodiment, the small-size cell base station SB and the macro-cell MC3 are configured to cooperate. In such case, the small-size cell SB is informed by the macro-cell MC3 of the used channels f6, f7 and f10 or the potentially used channels within MC3 (comprising therefore f6, f7 and f10). A signal comprising the information of the channels of the macro-cell is therefore sent to the small-size cell base station SB. This information may also be provided by the operator when the frequency planning is fixed.

According to another embodiment, the channels used in the macro-cell MC3 are determined by the small-size cell base station SB thanks to the achievement of a spectrum scanning of the surroundings.

The second step 102 corresponds to the detection of the macro-cell user terminals located within the predetermined area 3 around the coverage area 5 of the small-size cell SC1, u7 and u10 in the present case. This determination is achieved by the small-size cell base station SB by monitoring the signal quality (using a Received Signal Strength Indicator (RSSI) or a Signal to Interference plus Noise Ratio (SINR)) of the signals received from the macro-cell user terminals on the channels determined in the previous step 101. The macro-cell user terminals exhibiting a signal quality higher than a predetermined threshold corresponding to the macro-cell user terminals located within the predetermined area 3.

The third step 103 refers to the determination of the signal qualities associated with the macro-cell user terminals u7 and u10 detected in the previous step 102 and the signal qualities exhibited by the user terminals, x7 and x10, of the small-size cell SC1.

The fourth step 104 corresponds to the association of each detected macro-cell user terminal, u7 and u10, with a small-size cell user terminal, x7 and x10 in the present case. This association leads to the establishment of pairs of user terminals (u7, x7) and (u10, x10), each pair comprising a macro-cell user terminal located within the predetermined area 3 and a small-size cell user. The association is achieved according to the signal quality measured for the user terminals as well as the data rate required by the said user terminals. A macro-cell user terminal can only be paired with a small-size cell user terminal exhibiting a higher signal quality.

The fifth step 105 corresponds to the coordination between the small-size cell base station SB and the macro-cell base station MB1.

Such coordination allows the retrieving by the small-size cell base station SB of the information corresponding to the features of the signals sent from the macro-cell base station MB1 to the paired macro-cell user terminals, u7 and u10. The said features correspond to the data sent to the macro-cell user terminals u7 and u10 and the signal quality associated with the data signals received by the said terminals corresponding to the channel state information (RSSI or SINR exhibited by the macro-cell user terminals at the macro-cell base station MB1) as well as the radio configuration parameters (coding and modulation schemes, power levels...). To retrieve this information, the small-size cell base station SB sends a request message to the macro-cell base station MB 1 with the identities of the selected macro-cell user terminals u7 and u10 and the macro-cell base station MB1 sends the requested information back to the small-size cell base station SB. The small-size cell base station SB then knows the data symbols to send on the part of the signals aimed at the macro-cell user terminal u7 or u10.

Furthermore, as the small-size cell signal has to be perceived by the macro-cell user terminals, u7 and u10, as a complement to the signal sent by the macro-cell base station MB1, non only the data sent in the small-size cell signal need to be the same but both signals need also to be synchronized to be received at the same time by the macro-cell user terminals u7 and u10. As a consequence, the coordination step 105 also refers to a synchronization between both base stations so that both signals are sent on the same channel, that is to say on the same frequency, with the same codes and on the same time slots.

The sixth step 106 corresponds to the determination of the power to be allocated to the small-size cell signals according to the available power and the power allocated to the small-size signals of the other channels.

The seventh step 107 refers to the creation of the small-size cell signals comprising both superimposed parts, in the present case, two small-size cell signals, aimed respectively at x7 and x10 are produced. This step may comprise a negotiation between the macro-cell base station MB 1 and the small-size cell base station SB wherein the modulation formats used in the macro-cell signal and in the small-size cell signal are chosen in order to optimize the signal quality perceived by the macro-cell and small-size cell user terminals. In the present case, the modulation formats are a 16QAM format for the macro-cell part, a QPSK format for the small-size cell part and a 64QAM format for the superimposed signal but the negotiation may lead to the selection of other formats, for example a BPSK format for the part of the signal aimed at the small-size cell user terminal or any other digital modulation format if it provides a higher signal quality. The data to be encoded are also determined so that both parts can be encoded, modulated and superimposed to produce the desired small-size cell signal comprising both superimposed parts. The seventh step 107 also refers to the transmission, by the small-size cell base station SB, of the created small-size cell signals on a channel, f7 and f10 in the present case, being the same as the channel used by the macro-cell base station MB1 to send the macro-cell signal to the macro-cell user terminals, respectively u7 and 10, paired with the small-size cell user terminals to which the said signal is aimed at.

Thus, a macro-cell user terminal located within the coverage area of a small-size cell, for example u7, receives a 64QAM signal from the small-size cell base station SB. The macro-cell user terminal u7 detects and decodes the said received 64QAM signal as it was a 16QAM signal and therefore retrieves the data corresponding to the part aimed at the macro-cell user which are the same as the data received on the 16QAM signal sent from the macro-cell base station MB1. The small-size cell signal appears therefore as a complementary contribution of the macro-cell signal.

Besides, the small-size cell user terminal also receives the 64QAM signal, detects the said 64QAM signal as 16QAM signal to cancel the 16QAM part and then retrieves and decodes the remaining QPSK part. Such a decoding being referred as a successive interference cancellation technique.
Furthermore, it has to be noted that the embodiments of the present invention are not limited to the case of macro-cells and small-size cells but refers to any cells belonging to two different structures and overlapping at least partially so that interferences are created when the same channels are used in both structures.

The embodiments of the prevent invention therefore provides a method allowing to use the same channels in a small-size cell and in a macro-cell having a partial common coverage area which optimizes the sharing of the spectral resources without producing destructing interferences between both types of cells thanks to the superimposition of two signals within a common modulation format.

## Claims

1. Method for sharing radio resources in a wireless communication network comprising cells (MC1...MC9) of a first structure and cells (SC1, SC2, SC3) of a second structure,
a given cell (SC1) of the second structure having a coverage area overlapping at least partially a coverage area of a given cell (MC3) of the first structure wherein,
when a user terminal (u7, u10) of the given cell (MC3) of the first structure receives, from a base station (MB1) of the given cell (MC3) of the first structure, a macro-cell signal on a given channel (f7, f10) and is located within a predetermined area (3) around the given cell (SC1) of the second structure,
a selected user terminal (x7, x10) of the given cell (SC1) of the second structure is paired to the said user terminal (u7, u10) of the given cell (MC3) of the first structure and a signal of the second structure aimed at the paired user terminal (x7, x10) of the given cell (SC1) of the second structure is sent, from a base station (SB) of the given cell (SC1) of the second structure, on the same channel (f7, f10) as the given channel (f7, f10) used for the signal of the first structure, the said signal of the second structure comprising:
- one part aimed at the paired user terminal (u7, u10) of the first structure and modulated according to a first modulation format and,
- another part aimed at the paired user terminal (x7, x10) of the second structure and modulated according to a second modulation format,
the said parts being superimposed in a third modulation format.

2. Method in accordance with claim 1 wherein the first structure corresponds to a macro-cell network and the second structure corresponds to a small-size cell network.

3. Method in accordance with claim 1 or 2 wherein the part of the given cell (SC1) of the second structure signal aimed at the paired user of the first structure corresponds to the signal of the second structure sent from the base station (MB1) of the given cell (MC3) of the second structure.

4. Method in accordance with claim 3 wherein the said method comprises the following steps:
- determining, at the level of the given cell (SC1) of the second structure, channels used by the user terminals of the given cell (MC3) of the first structure;
- detecting among the determined channels and their paired user terminals, the user terminals (u7, u10) of the given cell (MC3) of the first structure located within the predetermined area (3);
- determining the signal qualities associated with the detected user terminals (u7, u10) of the given cell (MC3) of the first structure and the signal qualities associated with the user terminals (x7, x10) of the given cell (SC1) of the second structure;
- pairing a detected user terminal (u7, u10) of the given cell (MC3) of the first structure and a user terminal (x7, x10) of the given cell (SC1) of the second structure according to the signal qualities associated with both user terminals;
- establishing a coordination between the base station (MB1) of the given cell (MC3) of the first structure and the base station (SB) of the given cell (SC1) of the second structure;
- determining a power to be allocated to the signal of the second structure;
- producing and transmitting the signal of the second structure according to the determined power.

5. Method in accordance with claim 4 wherein the determination of the channels used by the users of the given cell of the first structure is achieved by sending a signal, from the base station (MB1) of the given cell (MC3) of the first structure to the base station (SB) of the given cell (SC1) of the second structure, comprising the information corresponding to channels (f1, f6, f7, f10) of the given cell (MC3) of the first structure.

6. Method in accordance with claim 4 or 5 wherein the detection of the user terminals (u7, u10) of the given cell of the first structure located within the predetermined area (3) is achieved by the base station (SB) of the cell (SC1) of the second structure by monitoring the signal quality of the signals received from the user terminals (u1, u6, u7, u10) of the given cell (MC3) of the first structure.

7. Method in accordance with one of the previous claims wherein a channel is defined by its frequency, its time slots and its codes.

8. Method in accordance with one of the claims 4 to 7 wherein the coordination between the base station (MB1) of the given cell (MC3) of the first structure and the base station (SB) of the given cell (SC1) of the second structure allows the base station (SB) of the given cell (SC1) of the second structure to know the data symbols to send on the part of the signal of the second structure aimed at the paired user of the first structure.

9. Method in accordance with one of the previous claims wherein the predetermined area (3) corresponds to an area equal or larger than the coverage area (5) of the cell of the second structure.

10. Method in accordance with one of the previous claims wherein the first, second and third modulation formats are digital modulation formats.

11. Method in accordance with claim 10 wherein the first modulation format comprises a first number of bits per symbol, the second modulation format comprises a second number of bits per symbol and the third modulation format comprises a number of bits per symbol equal to the sum of the first and the second number of bits per symbol.

12. Method in accordance with claim 11 wherein the first modulation format is a 16 quadrature amplitude modulation "16QAM" format, the second modulation format is a quadrature phase shift keying "QPSK" modulation format and the third modulation format is a 64 quadrature amplitude modulation "64QAM" format.

13. Base station (SB) of a cell (SC1) of a second structure having a coverage area overlapping at least partially a coverage area of a given cell (MC3) of a first structure and comprising means adapted for:
- determining channels (f1, f6, f7, f10) used by user terminals (u1, u6, u7, u10) of the given cell (MC3) of the first structure;
- detecting, among the determined channels (f1, f6, f7, f10) and their associated user terminals (u1, u6, u7, u10), the user terminals (u7, u10) located within a predetermined area (3),
- pairing a detected user terminal (u7, u10) with a user terminal (x7, x10) of the cell (SC1) of the second structure;
the base station (SB) also comprises
- encoding (11) and modulation (13) means adapted to produce a signal comprising:
- one part aimed at the user terminal (u7, u10) of the first structure located within a predetermined area (5) and modulated according to a first modulation format and,
- another part aimed at the associated user terminal (x7, x10) of the second structure and modulated according to a second modulation format,
- combination means (15) adapted to superimpose the said signal parts in a superimposed signal according to a third modulation format,
- sending means (19) adapted for sending the superimposed signal on the same channel (f7, f10) as the determined channel of the paired user terminal (u7, u10) of the given cell (MC3) of the first structure.

14. Base station in accordance with claim 13 wherein the first structure refers to a macro-cell network and the second structure refers to a a small-size cell network.

15. Base station (SB) in accordance with claim 13 or 14 and comprising also means adapted for:
- detecting a cell (MC3) of the first structure having a coverage area overlapping at least partially a coverage area of the cell (SC1) of the second structure;
- determining signal qualities associated with the detected user terminals of the given cell of the first structure and the signal qualities associated with the user terminals of the given cell of the second structure;
- establishing a coordination with a base station (MB1) of the detected cell (MC3) of the first structure to determine the signal sent from the said base station (MB1) of the detected cell (MC3) of the first structure to a user terminal (u7, u10) of the said detected cell (MC3) paired with a user terminal (x7, x10) of the cell (SC1) of the second structure;
- determining the power to be allocated to the signal of the second structure aimed at the user terminal (x7, x10) of the second structure paired with a user terminal (u7, u10) of the detected cell (MC3) of the first structure.

## Amended claims

### Amended claims in accordance with Rule 137(2) EPC.

**1.** Method for sharing radio resources in a wireless communication network comprising cells (MC1...MC9) of a first structure and cells (SC1, SC2, SC3) of a second structure, a given cell (SC1) of the second structure having a coverage area overlapping at least partially a coverage area of a given cell (MC3) of the first structure wherein,
when a user terminal (u7, u10) of the given cell (MC3) of the first structure receives, from a base station (MB1) of the given cell (MC3) of the first structure, a macro-cell signal on a given channel (f7, f10) and is located within a predetermined area (3) around the given cell (SC1) of the second structure,
a selected user terminal (x7, x10) of the given cell (SC1) of the second structure is paired (104) to the said user terminal (u7, u10) of the given cell (MC3) of the first structure and a signal of the second structure aimed at the paired user terminal (x7, x10) of the given cell (SC1) of the second structure is sent (107), from a base station (SB) of the given cell (SC1) of the second structure, on the same channel (f7, f10) as the given channel (f7, f10) used for the signal of the first structure, the said signal of the second structure comprising:
- one part aimed at the paired user terminal (u7, u10) of the first structure and modulated according to a first modulation format having a first baud rate and,
- another part aimed at the paired user terminal (x7, x10) of the second structure and modulated according to a second modulation format having a second baud rate,
the said parts being superimposed in a third modulation format having a third baud rate corresponding to the sum of the first and the second baud rates.

**2.** Method in accordance with claim 1 wherein the first structure corresponds to a macro-cell network and the second structure corresponds to a small-size cell network.

**3.** Method in accordance with claim 1 or 2 wherein the part of the given cell (SC1) of the second structure signal aimed at the paired user of the first structure corresponds to the signal of the second structure sent from the base station (MB1) of the given cell (MC3) ofthe second structure.

**4.** Method in accordance with claim 3 wherein the said method comprises the following steps:
- determining, at the level of the given cell (SC1) of the second structure, channels used by the user terminals of the given cell (MC3) of the first structure;
- detecting among the determined channels and their paired user terminals, the user terminals (u7, u10) of the given cell (MC3) of the first structure located within the predetermined area (3);
- determining the signal qualities associated with the detected user terminals (u7, u10) of the given cell (MC3) of the first structure and the signal qualities associated with the user terminals (x7, x10) of the given cell (SC1) of the second structure;
- pairing a detected user terminal (u7, u10) of the given cell (MC3) of the first structure and a user terminal (x7, x10) of the given cell (SC1) of the second structure according to the signal qualities associated with both user terminals;
- establishing a coordination between the base station (MB1) of the given cell (MC3) of the first structure and the base station (SB) of the given cell (SC1) of the second structure;
- determining a power to be allocated to the signal of the second structure;
- producing and transmitting the signal of the second structure according to the determined power.

**5.** Method in accordance with claim 4 wherein the determination of the channels used by the users of the given cell of the first structure is achieved by sending a signal, from the base station (MB1) of the given cell (MC3) of the first structure to the base station (SB) of the given cell (SC1) of the second structure, comprising the information corresponding to channels (f1, f6, f7, f10) of the given cell (MC3) of the first structure.

**6.** Method in accordance with claim 4 or 5 wherein the detection of the user terminals (u7, u10) of the given cell of the first structure located within the predetermined area (3) is achieved by the base station (SB) of the cell (SC1) of the second structure by monitoring the signal quality of the signals received from the user terminals (u1, u6, u7, u10) ofthe given cell (MC3) ofthe first structure.

**7.** Method in accordance with one of the previous claims wherein a channel is defined by its frequency, its time slots and its codes.

**8.** Method in accordance with one of the claims 4 to 7 wherein the coordination between the base station (MB1) of the given cell (MC3) of the first structure and the base station (SB) of the given cell (SC1) of the second structure allows the base station (SB) of the given cell (SC1) of the second structure to know the data symbols to send on the part of the signal of the second structure aimed at the paired user of the first structure.

**9.** Method in accordance with one of the previous claims wherein the predetermined area (3) corresponds to an area equal or larger than the coverage area (5) of the cell of the second structure.

**10.** Method in accordance with one of the previous claims wherein the first, second and third modulation formats are digital modulation formats.

**11.** Method in accordance with claim 10 wherein the first modulation format comprises a first number of bits per symbol, the second modulation format comprises a second number of bits per symbol and the third modulation format comprises a number of bits per symbol equal to the sum of the first and the second number of bits per symbol.

**12.** Method in accordance with claim 11 wherein the first modulation format is a 16 quadrature amplitude modulation "16QAM" format, the second modulation format is a quadrature phase shift keying "QPSK" modulation format and the third modulation format is a 64 quadrature amplitude modulation "64QAM" format.

**13.** Base station (SB) of a cell (SC1) of a second structure having a coverage area overlapping at least partially a coverage area of a given cell (MC3) of a first structure and comprising means adapted for:
- determining channels (f1, f6, f7, f10) used by user terminals (u1, u6, u7, u10) of the given cell (MC3) of the first structure;
- detecting, among the determined channels (f1, f6, f7, f10) and their associated user terminals (u1, u6, u7, u10), the user terminals (u7, u10) located within a predetermined area (3),
- pairing a detected user terminal (u7, u10) with a user terminal (x7, x10) of the cell (SC1) of the second structure;
the base station (SB) also comprises
- encoding (11) and modulation (13) means adapted to produce a signal comprising:
- one part aimed at the user terminal (u7, u10) of the first structure located within a predetermined area (5) and modulated according to a first modulation format having a first baud rate and,
- another part aimed at the associated user terminal (x7, x10) of the second structure and modulated according to a second modulation format having a second baud rate,
- combination means (15) adapted to superimpose the said signal parts in a superimposed signal according to a third modulation format having a third baud rate corresponding to the sum of the first and the second baud rates,
- sending means (19) adapted for sending the superimposed signal on the same channel (f7, f10) as the determined channel of the paired user terminal (u7, u10) of the given cell (MC3) of the first structure.

**14.** Base station in accordance with claim 13 wherein the first structure refers to a macro-cell network and the second structure refers to a a small-size cell network.

**15.** Base station (SB) in accordance with claim 13 or 14 and comprising also means adapted for:
- detecting a cell (MC3) of the first structure having a coverage area overlapping at least partially a coverage area of the cell (SC1) of the second structure;
- determining signal qualities associated with the detected user terminals of the given cell of the first structure and the signal qualities associated with the user terminals of the given cell of the second structure;
- establishing a coordination with a base station (MB1) of the detected cell (MC3) of the first structure to determine the signal sent from the said base station (MB1) of the detected cell (MC3) of the first structure to a user terminal (u7, u10) of the said detected cell (MC3) paired with a user terminal (x7, x10) of the cell (SC1) of the second structure;
- determining the power to be allocated to the signal of the second structure aimed at the user terminal (x7, x10) of the second structure paired with a user terminal (u7, u10) of the detected cell (MC3) of the first structure.
